# EUROPEAN PATENT APPLICATION

(11) **EP 2 500 094 A1**
(43) Date of publication of application: **19.09.2012**
(21) Application number: 11158137.7
(22) Date of filing: 14.03.2011
(51) Int. Cl.: B01L 3/00, C07C 275/40, G01N 21/77, G01N 27/333

(54) **Atmospheric sensor, NFC device, package and manufacturing method**

(71) Applicant: NXP B.V., 5656 AG Eindhoven (NL)
(72) Inventor: Humbert, Aurelie, Redhill, Surrey RH1 1DL (GB); Gravesteijn, Dirk, Redhill, Surrey RH1 1DL (GB); Teunissen, Pit, Redhill, Surrey RH1 1DL (GB); Bastiaansen, Cornelis Wilhelmus Maria, Redhill, Surrey RH1 1DL (GB)
(74) Representative: Crawford, Andrew

(57) **Abstract**

Disclosed is a sensor for detecting a component (20) of an atmosphere, the sensor compri

sing a sensing surface (14, 16) covered by a barrier layer (18) of a material switchable between respective layer orientations that have permeability to the component. A NFC device comprising such a sensor, a package incorporating the NFC device and a method of manufacturing the sensor are also disclosed.

## Description

### FIELD OF THE INVENTION

The present invention relates to a sensor for detecting a component of an atmosphere, the sensor comprising a sensing surface.

The present invention further relates to a near field communication (NFC) device comprising such a sensor.

The present invention yet further relates to a package comprising such a near field communication device.

The present invention even further relates to a method of manufacturing such a sensor.

### BACKGROUND OF THE INVENTION

Nowadays, many articles, in particular food products, are stored in a modified atmosphere package, in which the environment is significantly altered compared to normal atmospheric conditions to prolong the durability of the article. Such modified atmospheres typically contain reduced levels of CO₂ and O₂ to delay microbial degradation of the article.

In order to monitor the quality of the article, e.g. food product in the package, a sensor coupled to a NFC device such as a radio-frequency identification (RFID) tag may be placed in the modified atmosphere to monitor levels of trace components such as H₂O, CO₂, ethylene, NH₃ and so on in the modified atmosphere as the levels of such trace components give a reliable indication of the quality and the remaining usable lifetime of the article.

The levels of such trace components may be in the parts per million (ppm) range, i.e. significantly (e.g. several orders) smaller than their concentration in a normal atmosphere. This is particularly the case for components that are naturally abundant in the earth's atmosphere, e.g. O₂, CO₂, H₂O (moisture), and so on.

Many atmospheric sensors comprise some form of sensitive material that may engage in a reaction with the component of interest, e.g. oxidation in case of an oxygen sensor. Therefore, exposure to the atmospheric levels of the component of interest may cause irreversible degradation of the sensor, thus prohibiting reliable monitoring of the modified atmosphere in the package. However, avoiding such unwanted exposure requires manufacturing the sensors in modified atmospheres, which typically requires complex manufacturing techniques, which may make the sensor too expensive to be commercially interesting as the suitability of integration of such sensors in NFC devices is largely cost-driven.

### SUMMARY OF THE INVENTION

The present invention seeks to provide a sensor for detecting a component of an atmosphere that can be protected from prolonged exposure to excessive levels of the component.

The present invention further seeks to provide a NFC device comprising such a sensor.

The present invention yet further seeks to provide a package including such a NFC device.

The present invention even further seeks to provide a method of manufacturing such a sensor.

In accordance with a first aspect of the present invention, there is provided a sensor for detecting a component of an atmosphere, the sensor comprising a sensing surface covered by a barrier layer of a material switchable between respective layer orientations that have different permeability to the component.

The present invention has been based on the insight that the sensing surface of the sensor may be protected by a switchable layer that acts as a barrier layer to the component in a first orientation and becomes more permeable to the component in a second orientation, such that the sensor may be manufactured with the material switched to its barrier configuration, thereby protecting the sensing surface from overexposure to the atmospheric component, e.g. H₂O (moisture), or a gas such as CO₂ or O₂, with the barrier layer being switched to its more permeable configuration once the sensor has been placed inside a modified atmosphere package.

The barrier layer may be switched by exposure to at least one of temperature change, voltage, electrical field or electromagnetic radiation. UV or visible light is preferable as this allows switching to be initiated from outside a sealed package comprising the sensor as long as the package is transparent to the wavelength of the light.

Preferably, the material is a liquid crystal material, as it is well-known that liquid crystal materials such as liquid crystal polymers can be switched between states having different densities; see for instance Macromolecules, 1992, 25, pages 788-796. The liquid crystal material may for instance be switchable between a nematic or a smectic phase and an isotropic phase.

Alternatively, the material is an olefin having a cis conformation and a trans conformation respectively in said respective layer orientations as it is known per se that olefinic materials such as azobenzene-based polymers can be switched between states with substantially different properties, i.e. orientations. This is for instance clearly demonstrated in Nature Materials 8, 677 - 682 (2009) as well as in The European Physical Journal E: Soft Matter and Biological Physics, 23, pages 29-336 (2007).

The barrier layer may be the layer sensitive to said component. Alternatively, a separate sensing layer may be present, which is covered by the barrier layer. In the latter case, it is preferable that in case the sensing surface comprises a pair of electrodes spaced from each other by a given distance, said sensing layer has a thickness of at least 2.5 times said distance to ensure that any capacitive reading of the sensor is not affected by configuration changes in the barrier layer.

The sensor of the present invention may be advantageously incorporated into a near field communication device such as a RFID tag. Such a tag may be advantageously placed inside the modified atmosphere of a modified atmosphere package for packaging a perishable article such as a food product.

In accordance with another aspect of the present invention, there is provided a method of manufacturing a sensor for detecting a component of an atmosphere, comprising providing a substrate; forming at least one electrode on said substrate; and depositing a barrier layer over the resultant structure, said barrier layer being of a material switchable between respective layer orientations that have different permeability to the component. The inclusion of the barrier layer protects the sensor for prolonged exposure to normal atmospheric levels of the component of interest, such that complex manufacturing methods preventing such exposure can be avoided, thus reducing the cost of the sensor.

In an embodiment, the method further comprises depositing a component sensitive material over the at least one electrode prior to depositing said barrier layer. In this case, the barrier layer protects the component sensitive material from such exposure.

In case the step of forming at least one electrode comprises forming a pair of electrodes on said substrate, said electrodes being spaced from each other by a given distance, the step of depositing a component sensitive material over the at least one electrode further comprises depositing said component sensitive material to a thickness of at least 2.5 times said distance. In such a capacitive sensor, the dielectric constant of the sensitive material in between the electrodes should only vary as a function of the exposure to the atmospheric component of interest. As the dielectric constant of the barrier layer is likely to change substantially when switching between different layer orientations, the thickness of the sensing layer ensures that such changes in the dielectric constant do not affect the sensor measurements, i.e. the dielectric constant sensed by the electrodes.

### BRIEF DESCRIPTION OF THE EMBODIMENTS

Embodiments of the invention are described in more detail and by way of non-limiting examples with reference to the accompanying drawings, wherein:
FIG. 1 schematically depicts different phases of a liquid crystal material;
FIG. 2(a)-(f) schematically depict the steps of an exemplary embodiment of the method of the present invention; and
FIG. 3 schematically depicts a package including an NFC device with an embodiment of the sensor of the present invention.

### DETAILED DESCRIPTION OF THE DRAWINGS

It should be understood that the Figures are merely schematic and are not drawn to scale. It should also be understood that the same reference numerals are used throughout the Figures to indicate the same or similar parts.

A sensor in accordance with an embodiment of the present invention is based on the principle that its sensing surface can be protected from excessive exposure to an atmospheric component to be monitored such as H₂O, CO₂, ethylene, NH₃ and so on by the provision of a barrier layer that has a molecular or material orientation that can be altered, thereby altering the diffusion constant of the component of interest through the barrier layer, i.e. altering the permeability of the barrier layer.

In other words, the barrier layer can be switched between two material configurations, i.e. layer orientations, in which the molecules defining the layer typically have different shapes (conformations), which dictate the different macroscopic layer properties. The first configuration is a blocking state in which the permeability of the barrier layer for the component is zero or at least (significantly) reduced compared to the second configuration in which the barrier layer material has a more open structure, thus facilitating the diffusion of the atmospheric component from the atmosphere to the sensing surface through the barrier layer.

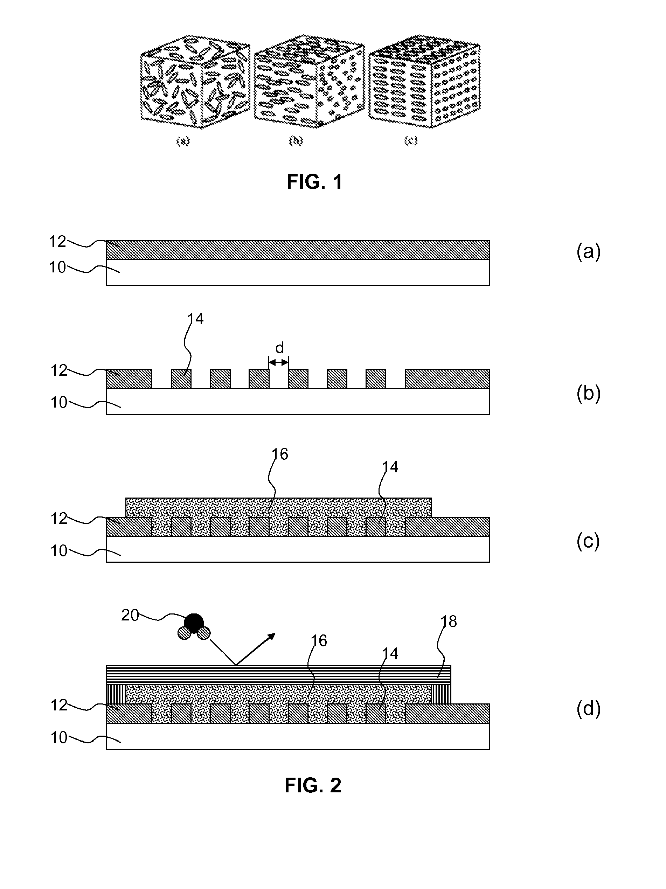

It is noted that such barrier materials are known per se. For instance, Salame and Steinsiger in Polymer-Plastics Technology and Engineering, Volume 8, Issue 2 1977 , pages 155 - 175 disclose a range of polymers of which the O₂ diffusion properties of the polymers can be tuned by controlling their crystallinity and orientation. Weinkauf et al. in Macromolecules, 1992, 25, pages 788-796 disclosed that liquid crystal (LC) polymers have oxygen sorption and gas transport properties that can be varied by varying the phase of the LC material. An example of such different phases is shown in FIG. 1. Substantially different gas transport properties were demonstrated for isotropic (a), mesomorphic (b) and fully crystalline phases (c) of some of the investigated LC polymers.

It is for instance also known that the orientation of LC polymers comprising an alkene such as an azobenzene either in the polymer backbone or as a dopant can be switched between a highly regular phase in which the azobenzene has adopted its trans-conformation and a more irregular phase in which the azobenzene has adopted its cis-conformation:

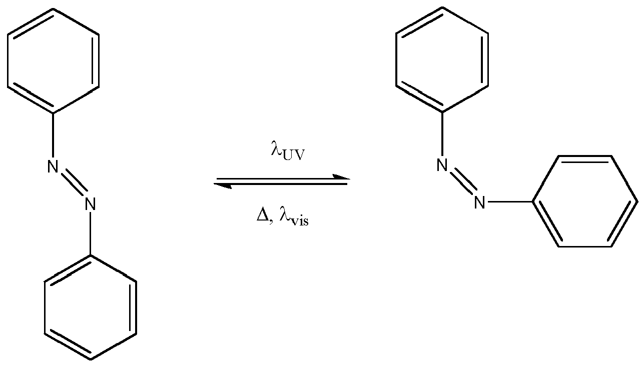

The order of an LC polymer network may also be disturbed by altering the pH of the environment of the network. For instance, it is known for the aligned polymer salt poly(nOBA/C6M)K that upon photo-polymerization of a nematic phase monomer, the thus obtained highly ordered polymer network may be disrupted by exposure to an alkaline environment; see e.g. Harris et al. in Macromolecular Rapid Communications, 27 (16), pages 1323-1329 (2006).

The present invention is based on the insight that the change in order of a (polymer) material and the associated change in transport properties through such a material can be used to protect a sensing surface of a sensor from overexposure to an atmospheric component, in particular components that are naturally abundant in the earth's atmosphere (i.e. in air) but only present in trace amounts, e.g. at ppm levels, in modified atmosphere packages. Such a tunable or switchable barrier layer may be added to any suitable type of atmospheric sensor, e.g. a gas sensor such as an oxygen sensor, CO₂ sensor and so on, a moisture sensor and any other type of sensor. The actual sensor design is not particularly limited; any suitable sensor design may be used.

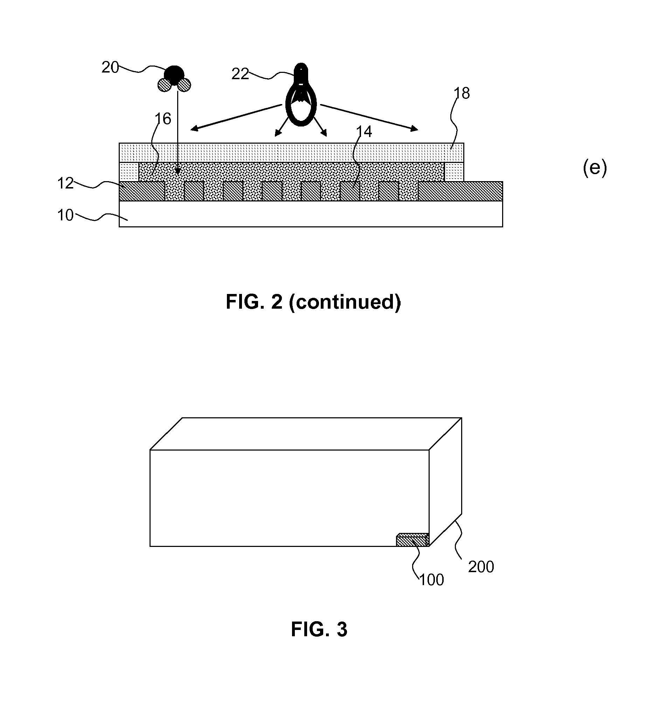

An example embodiment of a method of manufacturing such a sensor is shown in FIG. 2. In step (a) a substrate 10 is provided onto which a conductive layer 12 is formed in any suitable manner, e.g. through deposition. The substrate 10 may be of any suitable material, e.g. glass, polymer or a semiconductor such as doped silicon, SiGe, silicon-on-insulator and so on.

In a particularly advantageous embodiment, the substrate 10 is a semiconductor substrate and the conductive layer 12 is a metallization layer of the metallization stack formed over the substrate 10 to interconnect circuit elements (not shown) in the substrate 10. Such a metallization stack typically comprises a plurality of patterned metallization layers separated by an interlayer dielectric, with conductive vias extending through the interlayer dielectric to electrically interconnect different metallization layer portions with each other. The conductive layer 12 may be the upper layer of the metallization stack such that the sensing electrode(s) to be formed can be easily exposed to the environment of the device.

Alternatively, the conductive layer 12 may be formed on top of the metallization stack in which case a passivation layer may be present between the metallization stack and the conductive layer 12. This for instance has the advantage that the metallization stack is protected from exposure to moisture by the passivation layer, thus preventing potential short circuits in the device through excessive moisture levels penetrating the metallization stack.

Forming the conductive layer 12 as part of the metallization stack or on top of the metallization stack has the further advantage that the formation of this layer can be integrated in existing manufacturing technologies such as a CMOS process without requiring major redesign of the process to facilitate the integration of a sensor in e.g. a CMOS IC. In such an embodiment, the conductive layer 12 may be realized in a metal used in the CMOS process, e.g. Al or Cu.

In a next step (b), the conductive layer 12 is patterned, e.g. by etching or another suitable patterning method, to form one or more electrodes 14. Such electrodes 14 may for instance be conductively connected to circuit elements (not shown) in the substrate 10. Alternatively, such electrodes 14 may comprise a bond pad (not shown) for connecting the electrodes 14 to an external device. The number of electrodes 14 will be dictated by the type of sensor. For instance, the sensor may be an extended gate field effect transistor (EGFET) in which a single electrode 14 serves as the gate electrode of the sensor. Alternatively, the sensor may be a capacitive sensor in which two electrodes 14 define the plates of the capacitor, with the two electrodes separated from each other by a dielectric material that has a dielectric constant depending on the amount of atmospheric component of interest absorbed by the dielectric material, such that a capacitance measurement can determine the levels of the atmospheric component in the atmosphere to which the sensor is exposed. A particularly advantageous electrode layout is the use of interdigitated electrodes 14 as this creates capacitor plates with a very large area. Other electrode and sensor designs are also feasible and will be apparent to the skilled person.

In step (c), a material 16 sensitive to the atmospheric component of interest is deposited over the one or more electrodes 14 to functionalize the sensor. As previously explained, the material 16 may be any material capable of changing the potential of the gate of an EGFET or the capacitance of a capacitive sensor. Alternatively, materials may be used that for instance change the resistance or impedance of a resistive sensor, or invoke a potentiometric change, e.g. electrolyte materials. Such materials 16 are known per se. A number of non-limiting examples of suitable materials for use as sensor-active material in the detection of various substances are listed in Tables 1-3 below. Further examples of suitable sensitive materials can be found in, for example, Table 2 of "Materials Used as Chemical Sensor Elements" in "Chemical Sensor Technology", Vol.1, Ed. Tetsuro Seiyama, Elsevier 1988.

**Table 1-capacitive detection material**

| Substance | Capacitive type |
|---|---|
| Humidity | Al₂O₃, polyimide, TiO₂, SiO₂, SiC, polyesters, PMMA (Polymethyl methacrylate), BCB (Benzocyclobutene), polysulfates, cellulose acetate butyrate, porous silicon |
| CO₂ | N-H containing polymers or chemicals, polymer with high CO₂ absorption (e.g. PDMS, fluoropolymers) CuO mixed with BaSnO₃, SrTiO₃, CaTiO₃, ZnO or BaTiO_{3,}, SnO₂ |
| O₂ | Zirconium oxide, Irridium oxides |
| Ethylene | SnO₂ based film |
| NH₃ | Porous SiC, TiO₂ |

**Table 2-resistive / MOSFET detection material**

| | |
|---|---|
| Substance | Resistive/MOSFET type |
| Humidity | Metal oxides, Porous silicon, conductive polymers |
| CO₂ | Emeraldine base polyaniline poymer, polypyrrole, SnO₂, In₂Te₃, Porous silicon |
| O₂ | Almost all Metal oxides, e.g. TiO₂, SnO₂, Al₂O₃, ZnO , WO₃ and In₂O₃, Nb₂O₅, Ga₂O₃, ZrO₂, CeO₂, BaSnO₃, perovskites such as SrTiO₃, LaMnO₃, BaZrO₃ and BaSnO₃CuAlS₂, TiS₂, CuFeTe₂,Porous silicon |
| Ethylene | SnO₂ based film |

**Table 3-Electrolyte detection material**

| Substance | Potentiometric type |
|---|---|
| CO₂ | Nasicon, Lisicon |
| O₂ | YSZ, Nasicon, Nafion |

In order to protect the component sensitive material 16 from premature exposure to the atmospheric component 20, a barrier layer 18 that can be switched between a 'dosed' or non-permeable configuration and an 'open' or permeable configuration in which the diffusion of the atmospheric component 20 through the barrier layer 18 is facilitated is deposited over the component sensitive material 16. The barrier layer 18 preferably is deposited in the 'closed' orientation, thereby minimizing the duration of the exposure of the sensitive material 16 to the atmospheric component 20, and thus minimizing the risk that the sensor becomes unreliable due to (excessive) degradation or saturation of the component sensitive material 16. Preferably, in its blocking mode, the barrier layer 18 prevents the diffusion of the atmospheric component 20. It is however noted that in the aforementioned closed orientation of the barrier layer 18 diffusion of the atmospheric component 20 through the barrier layer 18 may still occur, but at a much smaller rate than in the open orientation of the barrier layer 18.

The material of the barrier layer preferably is a LC polymer material as it has been previously explained that it already has been established for such materials that gas transport properties through the material can be controlled by changing the orientation or phase of the LC polymer material. For instance, it is well known that in the nematic and the smectic phase, a LC material has a highly ordered (uniaxially aligned) structure, for which it can be expected that gas transport through such organized phases is severely limited due to the tight packing of the LC molecules in such highly ordered phases. In contrast, the more random order of e.g. an isotropic phase of the LC material is likely to increase gas transport through the LC material.

It is of course well-known that LC materials can be switched between such ordered and chaotic phases by external triggers, such as shown in step (e). Non-limiting examples of such triggers include exposure to an electromagnetic force, e.g. a voltage or electrical field, exposure to electromagnetic radiation 22, e.g. UV or visible light to induce a conformation change such as a cis-trans isomerization in the LC material, a temperature change, and so on. In an embodiment (not shown), the sensor may have a further pair of electrodes in contact with the barrier layer 18 to trigger the molecular organization in the barrier layer 18 by exposing the barrier layer 18 to an electrical field or a voltage as previously explained. By switching the barrier layer 18 to its open or permeable state, atmospheric component 20 can (more easily) pass through the barrier layer 18 as shown in step (e).

At this point it is noted that the barrier layer 18 may also be sensitive to the atmospheric component 20. In such a case the component sensitive layer 16 may be omitted from the sensor, and the barrier layer 18 may be deposited directly over the one or more electrodes 14.

In case of a capacitive sensor comprising a pair of electrodes 14, such as shown in step (b), the electrodes 14 are typically spaced by a given distance d. In order to ensure that the capacitive measurement is not affected to changes in the dielectric constant of the barrier layer 18, the component sensitive layer 16 should be thick enough to prevent the electrodes 14 from sensing such changes in the barrier layer 18. It has been found that the desired insensitivity of the electrodes 14 to such changes in the barrier layer 18 is achieved when the thickness of component sensitive layer 16 is at least 2.5d, i.e. at least two and a half times the spacing distance of the electrodes 14. A value of 5d is preferred for the spacing distance as at this distance the optimal trade-off between desensitization and device compactness is obtained.

The barrier layer 18 will typically only be switched once from its (substantially) impermeable state to its permeable state, i.e. when the sensor is placed inside a modified atmosphere such as inside a modified atmosphere package, thereby protecting the sensing material from premature overexposure to the atmospheric component 20 as previously explained. Because such switching only has to take place once, it is not necessary for the switching to be completed quickly, e.g. in less than 100 ms, as the monitoring of the modified atmosphere typically will take place over a period of days or even weeks. Hence, the barrier material 18 may adopt an orientation, e.g. a smectic phase, despite the fact that it is well known that switching such a highly organized phase to a more random phase such as an isotropic phase can take several seconds.

The sensor of the present invention may be integrated in a NFC device such as a RFID tag. Such a NFC device 100 can be placed inside a modified atmosphere package 200 as shown in FIG. 3 such that the composition of the modified atmosphere inside the package 200 can be monitored and communicated to a nearby transceiver. The NFC device 100 may be a passive device, i.e. may be activated by placement in an electromagnetic field such as a radiofrequency field or may be an active device, i.e. have its own power supply to periodically send a sensor reading to a remote receiver. Any suitable configuration of the NFC device 100 may be chosen. Preferably, the sensor and the NFC device 100 are integrated on the same substrate 10, i.e. manufactured in the same manufacturing process such as a semiconductor process like CMOS.

The barrier layer 18 is typically switched to its permeable or open configuration once the NFC device 100 has been placed inside the package 200 and the package 200 has been sealed in an air-tight manner. This may be achieved by exposing the sensor to a suitable trigger, e.g. electromagnetic radiation of a suitable wavelength, by sending a control signal to the NFC device 100 to apply an electromagnetic force to the barrier layer 18, e.g. an electric field or a voltage, and so on.

At this point it is noted that the sensor of the present invention may be advantageously applied in MAPs 200 that have an atmosphere comprising significantly reduced levels of the analyte of interest compared to the levels of the analyte of interest in the earth's atmosphere for reasons explained in detail above. However, it should be understood that the sensor of the present invention is not limited to MAPs 200 having such a modified atmosphere. The sensor of the present invention may equally be applied in a MAP 200 in which increased levels of an analyte of interest compared to its level in the earth's atmosphere are present, such as a MAP 200 in which CO₂ is present at levels in the parts per hundred range, whereas the CO₂ level in air is typically around 400ppm. Another non-limiting example is a MAP 200 for containing red meat, in which oxygen levels may be increased to preserve the color of the meat. The sensor of the present invention may further be advantageously applied in vacuum packages, where it can be used to detect trace (i.e. ppm) levels of any suitable gas.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

## Claims

1. A sensor for detecting a component (20) of an atmosphere, the sensor comprising a sensing surface (14, 16) covered by a barrier layer (18) of a material switchable between respective layer orientations that have different permeability to the component.

2. The sensor of claim 1, wherein the component (20) is a gas or moisture.

3. The sensor of claim 1 or 2, wherein the barrier layer (18) is switchable by exposure to at least one of temperature change, voltage, electrical field or electromagnetic radiation.

4. The sensor of any of claims 1-3, wherein the material is a liquid crystal material.

5. The sensor of claim 4, wherein the liquid crystal material is switchable between a nematic or a smectic phase and an isotropic phase.

6. The sensor of any of claims 1-5, wherein the material is an olefin switchable between a cis-conformation and a trans-conformation to form said respective layer orientations.

7. The sensor of any of claims 1-6, wherein the sensing surface (14, 16) comprises a layer (16) sensitive to said component.

8. The sensor of claim 7, wherein the barrier layer (18) is the sensing layer.

9. The sensor of claim 7, wherein the sensing layer (16) is covered by the barrier layer (18).

10. The sensor of claim 9, wherein the sensing surface (16) comprises a pair of electrodes (14) spaced from each other by a given distance, said sensing layer having a thickness of at least 2.5 times said distance.

11. A near field communication device (100) comprising the sensor of any of claims 1-10.

12. A package (100) comprising the near field communication device (100) of claim 11.

13. A method of manufacturing a sensor for detecting a component (20) of an atmosphere, comprising:
providing a substrate (10);
forming at least one electrode (14) on said substrate; and
depositing a barrier layer (18) over the resultant structure, said barrier layer being of a material switchable between respective layer orientations that have different permeability to the component.

14. The method of claim 13, further comprising depositing a component sensitive material (16) over the at least one electrode (14) prior to depositing said barrier layer (18).

15. The method of claim 14, wherein the step of forming at least one electrode (14) comprises forming a pair of electrodes on said substrate (10), said electrodes being spaced from each other by a given distance, and wherein the step of depositing a component sensitive material (16) over the at least one electrode comprises depositing said component sensitive material to a thickness of at least 2.5 times said distance.

## Amended claims

### Amended claims in accordance with Rule 137(2) EPC.

**1.** A sensor for detecting a component (20) of an atmosphere, the sensor comprising a sensing surface (14, 16) covered by a barrier layer (18) of a material switchable between a layer orientation defined by a first conformation of the molecules defining said layer and a further layer orientation defined by a second conformation of said molecules, said respective layer orientations having a different permeability to the component, **characterized in that** the material is:
a liquid crystal material; or
an olefin switchable between a cis-conformation and a trans-conformation to form said respective layer orientations.

**2.** The sensor of claim 1, wherein the component (20) is a gas or moisture.

**3.** The sensor of claim 1 or 2, wherein the barrier layer (18) is switchable by exposure to at least one of temperature change, voltage, electrical field or electromagnetic radiation.

**4.** The sensor of claim 1, wherein the liquid crystal material is switchable between a nematic or a smectic phase and an isotropic phase.

**5.** The sensor of any of claims 1-4, wherein the sensing surface (14, 16) comprises a layer (16) sensitive to said component.

**6.** The sensor of claim 5, wherein the barrier layer (18) is the sensing layer.

**7.** The sensor of claim 5, wherein the sensing layer (16) is covered by the barrier layer (18).

**8.** The sensor of claim 7, wherein the sensing surface (16) comprises a pair of electrodes (14) spaced from each other by a given distance, said sensing layer having a thickness of at least 2.5 times said distance.

**9.** A near field communication device (100) comprising the sensor of any of claims 1-8.

**10.** A package (100) comprising the near field communication device (100) of claim 9.

**11.** A method of manufacturing a sensor for detecting a component (20) of an atmosphere, comprising:
providing a substrate (10);
forming at least one electrode (14) on said substrate; and
depositing a barrier layer (18) over the resultant structure, said barrier layer being of a material switchable between a layer orientation defined by a first conformation of the molecules defining said layer and a further layer orientation defined by a second conformation of said molecules, said respective layer orientations having a different permeability to the component, **characterized in that** the material is:
a liquid crystal material; or
an olefin switchable between a cis-conformation and a trans-conformation to form said respective layer orientations.

**12.** The method of claim 11, further comprising depositing a component sensitive material (16) over the at least one electrode (14) prior to depositing said barrier layer (18).

**13.** The method of claim 12, wherein the step of forming at least one electrode (14) comprises forming a pair of electrodes on said substrate (10), said electrodes being spaced from each other by a given distance, and wherein the step of depositing a component sensitive material (16) over the at least one electrode comprises depositing said component sensitive material to a thickness of at least 2.5 times said distance.
